Europäisches Patentamt

European Patent Office

Office européen des brevets

(11) Veröffentlichungsnummer: **0 276 673**
**A1**

## (12) EUROPÄISCHE PATENTANMELDUNG

(21) Anmeldenummer: 88100278.6

(22) Anmeldetag: 12.01.88

(51) Int. Cl.⁴: **F16F 13/00** , B60K 5/12

(30) Priorität: 21.01.87 IT 6703487

(43) Veröffentlichungstag der Anmeldung:
03.08.88 Patentblatt 88/31

(84) Benannte Vertragsstaaten:
DE FR

(71) Anmelder: **ITT Industrie Riunite SpA**
**Via San Giacomo 2**
**I-10092 Beinasco (Torino)(IT)**

(72) Erfinder: **Caramagna, Mario**
**Via Rubino 76**
**Toriono(IT)**

(74) Vertreter: **Grau, Ulf**
**c/o ALFRED TEVES GMBH Guerickestrasse 7**
**D-6000 Frankfurt (M) 90(DE)**

(54) **Elastische schwingungsdämpfende Stütze mit hydraulischer Dämpfung, insbesondere für Kolbenmotoren.**

(57) Die Stütze, die insbesondere für Kolbenmotoren von Kraftfahrzeugen bestimmt ist, entspicht der Ausführung, bei der ein mit einer dämpfenden Flüssigkeit angefüllter Hohlraum in zwei Kammern (30,32) durch eine Quertrennwand (28a,28b) unterteilt ist, die einen verengten innenliegenden Kanal (38a,38b) für den Durchgang der Flüssigkeit von einer Kammer zur anderen aufweist. Erfindungsgemäß besteht die Trennwand (28a,38b) aus einem zwischen zwei einander axial gegenüberliegend am Umfang angeordneten Schultern 48a,48a;46b,48b) eingesetzten starren Element und ist zwischen diesen Schultern wie ein freier Kolben beweglich.

FIG. 1

# Elastische schwingungsdämpfende Stütze mit hydraulischer Dämpfung, insbesondere für Kolbenmotoren

Die vorliegende Erfindung bezieht sich auf eine elastische schwingungsdämpfende Stütze mit hydraulischer Dämpfung, insbesondere für Kolbenmotoren, umfassend:

- ein einen äußeren Mantel aufweisendes starres erstes Stützenteil und ein zu einem Ende der Stütze hin angeordnetes und eine gemeinsame Achse mit dem ersten Stützenteil besitzendes starres zweites Stützenteil;
- einen aus Elastomer oder einem anderen elastisch verformbaren Werkstoff besthenden Ringkörper, der den Mantel des ersten Stützenteils mit dem zweiten Stützenteil verbindet;
- eine flexible quer angeordnete Membran, die den Mantel des ersten Stützenteils abschließt und die an einem Ende der Stütze hin angeordnet ist, das dem zweiten Stützenteil gegenüberliegt;
- wobei die beiden Stützenteile, der verformbare Körper und die Membran einen inneren, mit einer dämpfenden Flüssigkeit angefüllten Hohlraum begrenzen; und
- eine zur gemeinsamen Achse quer angeordnete, mit dem Mantel des ersten Stützenteils in Verbindung stehende starre Trennwand, die den Hohlraum in eine auf der Seite der Membran liegende erste Kammer und in eine auf der Seite des zweiten Stützenteils und des verformbaren Ringkörpers liegende zweite Kammer unterteilt, einen innenliegenden Kanal für die gedrosselte Verbindung zwischen den beiden Kammern aufweist und in der Lage ist, sich in Richtung zu der einen oder der anderen Kammer hin zu bewegen.

Elastische schwingungsdämpfende Stützen dieser Art sind aus der FR-A 2.537.681 und FR-A 2.538.062 bekannt.

Bei diesen bekannten Stützen ist die die beiden Kammern unterteilende und den Drosselkanal aufweisende Quertrennwand zwar starr. Ihr äußerer Rand jedoch ist am Mantel des zweiten Stützenteils mit Hilfe eines elastischen Ringelements aus Gummi oder ähnlichem Werkstoff aufgehängt, das am Mantel durch eine Einspannung befestigt ist. Dieses ringförmige Aufhängungselement biegt sich und gestattet dadurch der starren Trennwand eine Bewegung in Richtung zur der einen oder anderen Kammer hin. Diese bekannten Stützen arbeiten wie folgt:

Aufgrund der Schwindgungen mit niedriger Frequenz (geringer als 10 Hz) und großer Amplitude (einige Millimeter) wie denjenigen eines mit Mindestleerlaufdrehzahl laufenden Motors eines Kraftfahrzeugs schwingt das am Motorblock oder an einem anderen vibrierenden Konstuktionsteil befestigte Stützenteil in senkrechter Richtung mit einer ungefähr sinusförmigen Bewegung verhältnismäßig großen Hubes im Bereich von einigen Millimetern. Diese Bewegung des Stützenteils wird auf die im Hohlraum der Stütze enthaltene Flüssigkeit übertragen, die ihrerseits die Trennwand innerhalb der durch ihr ringfömiges Aufhängungselement vorgegebenen Grenzen in axialer Richtung zum Schwingen bringt. Die Schwingungsweite des Stützenteils ist jedoch so groß, daß die Flüssigkeit dazu gebracht wird, zyklisch über den der gedrosselten Verbindung dienenden Kanal von einer in die andere Kammer zu fließen. Der Druck der durch diesen Kanal fließenden Flüssigkeit versteift die Stütze wie gewünscht, da sie einen viskosen Widerstand in einem solchen Umfang entstehen läßt, daß die schwingungen des Motors gedämpft werden. Die zyklischen Volumenänderungen der Kammern werden durch die Verformung der aus einem Elastomer bestehenden Membran aufgenommen.

Die gleiche Erscheinung tritt bei einen Kraftfahrzeugmotor aufgrund der durch die Unregelmäßigkeiten der Straße hervorgerufenen Schwingungen des Motors auf.

Infolge der Schwingungen mit verhältnismäßig hoher Frequenz (mehr als 20 Hz) und geringer Amplitude (weniger als 1 Millimeter) wie denjenigen eines Kraftfahrzeugmotors beim Fahren (also mit einer Drehzahl, die höher ist als die Mindestleerlaufdrehzahl) haben die Schwingungen des am Motorblock oder an einem anderen vibrierenden Konstruktionsteil befestigten Stützenteils zumindest in der Theorie lediglich die Wirkung, die Trennwand innerhalb der durch deren ringförmiges Aufhängungselement vorgegebenen Grenzen zyklisch schwingen zu lassen. Die in dem verengten Durchgangskanal vorhandene Flüssigkeit bleibt in diesem Falle allerdings bewegungslos und ruft keine unerwünschte Versteifung der Stütze hervor.

Die bekannten Stützen weisen jedoch die folgenden Nachteile auf:

Die Konstruktion der Aufhängung der Trennwand mit Hilfe des äußeren elastischen Ringelements ist recht kompliziert und kostenaufwendig.

Dadurch, daß die starre Trennwand mit Hilfe des Ausfhängungsrings am Mantel verankert ist, der im Interesse seiner kräftigen Ausbildung ziemlich starr ist, schwingt diese nur schwer mit der bei hohen Frequenzen erforderlichen maximalen Weite, so daß auch bei diesen Frequenzen ein Teil der Flüssigkeit von einer Kammer in die andere durch den der gedrosselten Verbindung dienenden Kanal hinüberfließt, wodurch sich die Stütze in unerwünschter Weise versteift.

So kräftig das ringfförmige Aufhängungselement für die Trennwand auch ausgebildet sein mag, machen es seine zyklishen Biegebewegungen doch ermüdungsbruchempfindlich.

Die Aufgabe der vorliegenden Erfindung ist es, eine gattungsgemäße Stütze zu schaffen, die diese Nachteile vermeidet.

Diese Aufgabe wird erfindungsgemäß durch die kennzeichnenden Merkmale des Anspruches 1 gelöst.

Wie sich aus der auf die Zeichnung bezogenen Beschreibung noch deutlicher ergeben wird, sind bei einer erfindungsgemäßen Stütze sowohl die Trennwand als auch die Konstruktion für deren Anbringung im Mantel des ersten Stützenteils sehr einfach ausgebildet und daher kostengünstig.

Da die Trennwand in ihrer Bewegung zwischen den Schultern vollkommen frei ist, (sich also wie ein freier Kolben bewegt), reagiert sie sofort auf die bei hohen Frequenzen auftretenden Schwingungen geringer Amplitude und legt sich zyklisch gegen die eine oder die andere Schulter an, so daß bei hohen Frequenzen keinerlei Preßdruck der Flüssigkeit in dem der gedrosselten Verbindung dienenden Kanal auftritt und die Stütze keiner unerwünschten Verfsteifung unterliegt.

Da die Trennwand nicht an einem äußeren elastischen Ring aufgehängt ist, bestehen keine Probleme im Zusammenhang mit Ermüdungsbruch.

Weitere Merkmale der Erfindung ergeben sich aus der folgenden Beschreibung zweier bevorzugter Ausführungsformen der Erfindung.

Hierzu zeigt:

Fig. 1 einen Längsschnitt durch eine Stütze gemäß einer ersten Ausführungsform der Erfindung,

Fig. 2 einen Halblängsschnitt durch eine Stütze gemäß einer weiteren Ausführungsform der Erfindung.

Zur Beschreibung der beiden dargestellten Ausführungsformen gemeinsamen Teile wird auf beide Figuren Bezug genommen, wobei für einander entsprechende Teile dieselben Bezugszeichen benutzt werden.

Die Stütze umfaßt ein erstes, starres, topfförmiges Stützenteil 10 aus Metall, im wesentlichen bestehend aus einem äußeren Mantel 12 mit einem am Umfang angeordneten Flansch 14 zur Befestigung an einer Tragkonstruktion wie etwa dem Rahmen des Kraftfahrzeugs oder an einem - schwingenden Konstruktionsteil wie etwa dem Motorblock des Kraftfahrzeuges.

Die Stütze umfaßt weiter ein auf die Höhe des Flansches 14 angeordnetes und eine mit dem ersten Stützenteil 10 gemeinsame Achse A aufweisendes zweites Stützenteil 16 aus Metall. Das zweite Stützenteil 16 besitzt eine Gewindeblindbohrung 18 für die Aufnahme einer Stiftschraube für die Befestigung an dem anderen, schwindgenden bzw. tragenden Konstruktionsteil.

Der Mantel 12 des ersten Stützenteils 10 und das zweite Stützenteil 16 sind durch einen relativ dicken, aus Elastomer oder einem anderen elastisch verfombaren Werkstoff bestehenden Ringkörper 20 miteinander verbunden. Die Befestigung des Ringkörpers 20 an den beiden Stützenteilen wird durch Vulkanisierung erreicht. Aufgrund seiner Verformbarkeit gestattet es der Ringkörper 20 den Stützenteilen, in Richtung ihrer gemeinsamen Achse Schwingbewegungen relativ zueinander auszuführen.

Dem zweiten Stützenteil 16 gegenüber befindet sich eine flexible Membran 22, die den Mantel 12 des ersten Stützenteils 10 nach unten hin abschließt. Die Membran 22 ist durch eine Metallschutzkappe 24 abgedeckt, in der sich Entlastungsbohrungen 26 befinden.

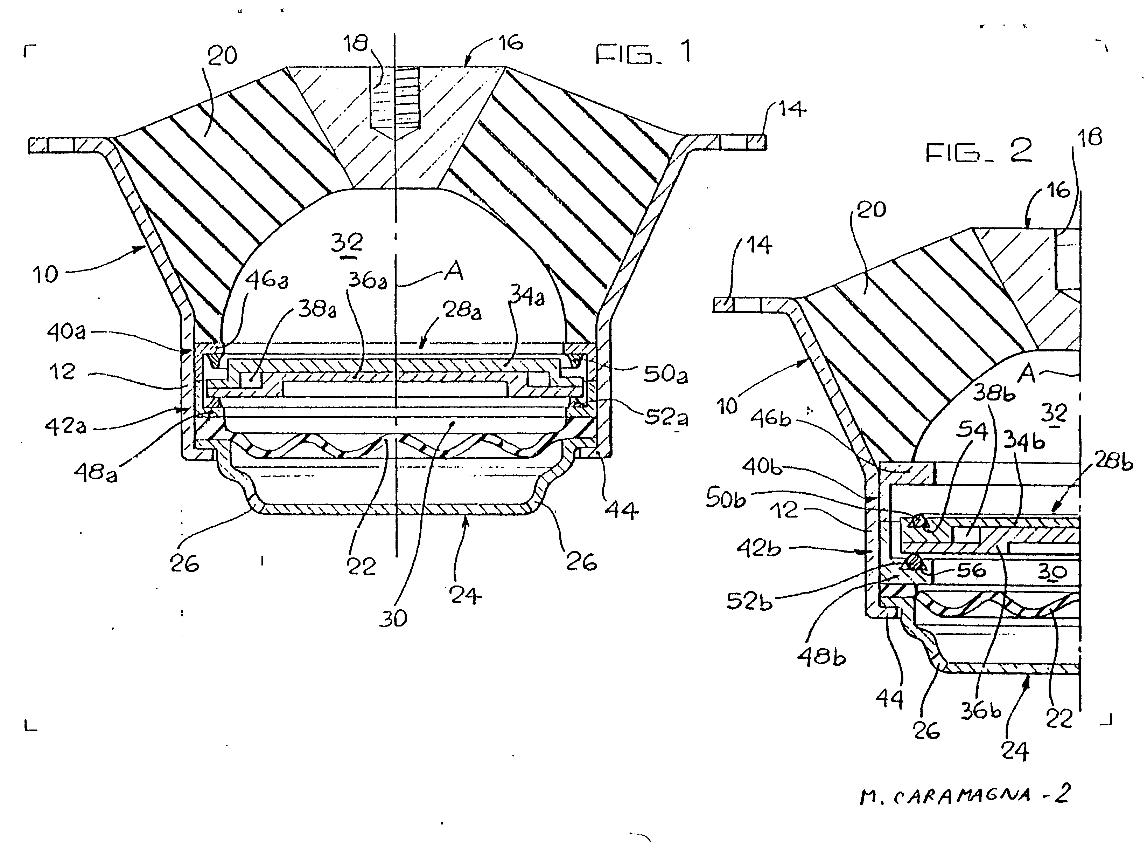

Die beiden Stützenteile 10 und 16 und die Memban 22 begrenzen in der Stütze einen inneren, vollständnig mit einer dämpfenden Flüssigkeit angefüllten Hohlraum. In diesem Hohlraum befindet sich eine starre Trennwand 28a (Fig. 1) oder 28b (Fig. 2), die diesen in eine erste, auf der Seite der Membran 22 angeordnete Kammer 30 und in eine zweite, auf der Seite des zweiten Stützenteils 16 und des verformbaren Körpers 20 liegende Kammer 32 unterteilt.

Die starre Trennwand 28a oder 28b wird vorzugsweise durch zwei miteinander verbundene Metallscheiben 34a, 36a bzw. 34b, 36b gebildet. Zwischen diesen beiden Scheiben ist ein ringförmiger Kanal mit gedrosseltem Durchgang 38a bzw. 38b, mit schraubenförmigen Verlauf begrenzt, der die beiden Kammern 30 und 32 in bekannter, nicht dargestellter Weise miteinander in Verbindung setzt.

Im Mantel 12 und in Anlage an seiner Innenfläche sind zwei Metallringe mit L-förmigem Querschnitt, mit den Bezugsziffern 40a,42a (Fig. 1) bzw. 40b,42b (Fig. 2) angeordnet. Diese L-Ringe werden zusammen mit dem Rand der Membran 22 und dem Rand der Kappe 24 zwischen einem entsprechenden inneren Ende des Ringkörpers 20 und einer Einbörderlung 44 des Mantels 12 festgehalten. Der äußere Rand der Trennwand 28a oder 28b erstreckt sich in den durch die betreffenden Ringe 40a,42a und 40b, 42b begrenzten Ringkanal.

Unter Bezugnahme auf die Fig. 1 bilden die radial nach innen gerichteten Schenkel 46a,48a der Ringe 40a,42a einander axial gegenüberliegend am Umfang angeordnete und mit dem Mantel 12 fest verbundene Schultern, zwischen denen die Trennwand 28a wie ein freier Kolben beweglich ist.

Ebenso ist in der Ausführungsform nach Fig. 2 die Trennwand 28b nach Art der eines freien Kolbens beweglich zwischen den durch die radialen Schenkel 46b,48b der Ringe 40b,42b gebildeten Schultern.

In der Ausführungsform nach Fig. 1 sind auf den einander zugewandten Seiten der Schultern 46a,48a Dichtungsmittel vorgesehen, die durch unterteilte, aus Elastomer bestehende, durch Aufvulkanisieren angebrachte Dichtungsringe 50a,52a gebildet werden. Diese Dichtungen 50a,52a haben eine dreifache Funktion:

Sie dienen zur Ausbildung einer Flüssigkeitsabdichtung zusammen mit dem äußeren Rand der Trennwand 28a, wenn sich diese in der einen oder in der anderen Endlagenstellung befindet.

Sie dienen als elastische Endlagenanschläge gegenüber der Trennwand 28a und schließen auf diese Weise das deutliche Geräusch aus, das in dem Falle entstehen würde, wenn eine Metalltrennwand unmittelbar gegen die Metallschultern stieße.

Schließlich verhalten sie sich dank ihrer Elastizität wie eine Feder gegenüber der Trennwand 28a, mit dem weiter unten erläuterten Vorteil.

In der Ausführungsform nach Fig. 2 werden die elastischen Dichtungsmittel durch O-Ringe 50b und 52b aus Elastomer gebildet. Der Ring 50b ist in einer am Rand der Scheibe 34b der Trennwand 28b eingearbeiteten schwalbenschwanz förmigen Ringnut 54 eingelassen. Der Ring 52b ist in einer in der Fläche der Innenseite des radialen Schenkels 48b eingearbeiteten schwalbenschwanzförmigen Ringnut 56 eingelassen und ragt geringfügig aus dieser Nut hervor. Der Ring 50b soll gegen die Schulter oder den radialen Schenkel 46b in Anlage kommen, und der Ring 52b soll gegen den Rand der Trennwand 28b in Anlage kommen.

Die Funktion der O-Ringe 50b und 52b nach Fig. 2 ist die gleiche wie die der aufvulkanisierten Ringe 50a und 52a nach Fig. 1.

Nach weiteren nicht dargestellten Varianten könnte eine starre Trennwand mit zwei aufvulmanisierten Dichtungsringen oder mit O-Ringen versehen sein. Ebenso könnten die O-Ringe nach Fig. 2 in schwalbenschwanzförmigen Nuten beider Schultern eingelassen sein.

Die Arbeitsweise der elastischen Stützen nach den Figuren 1 und 2 ist folgende:

Wenn man annimmt, daß das erste Stützteil 10 am Rahmen eines Kraftfahrzeugs befestigt ist und das zweite Stützteil 16 am Motorblock befestigt ist, erfolgt aufgrund der auf den Betrieb des Motors während des Fahrens zurückzuführenden Vibrationen eine senkrechte Verschiebung des zweiten Stützteils 16 under Ausführung einer ungefähr Sinusform aufweisenden hochfrequenten (mehr als 20 Hz) Bewegung bei nur geringfügiger Verschiebungsweite (geringer als 1 Millimeter).

Diese Bewegung wird auf die in der Kammer 32 enthaltene Flüssigkeit übertragen, die diese ihrerseits auf die Trennwand 28a oder 28b überträgt, die zwischen den Schultern schwingt. Die sich daraus ergebende Volumenänderung der Kammer 30 wird von der Membran 22 aufgenommen. Die Bohrungen 26 geben der zwischen der Membran 22 und der Kappe 24 enthaltenen Luft die Möglichkeit des Ein-und Austritts.

Da sich die Trennwand 28a zusammen mit der in den beiden Kammern 30 und 32 enthaltenen Flüssigkeit bewegt, bleibt die in dem Kanal 38a oder 38b enthaltene Flüssigkeit bewegungslos und ruft keine Versteifung der Stütze hervor.

Bei während des Fahrens des Fahrzeuges z.B. durch Straßenunebenheiten hervorgerufenen Schwingungen ist die Relativverschiebung der beiden Stützenteile 10 und 16 durch niedrige Frequenzwerte (weniger als 10 Hz) und hohe Werte der Verschiebungsweite (mehr als 2 Millimeter) gekennzeichnet. Die Trennwand 28a und 28b wird bei der durch die Bewegung des zweiten Stützenteils 16 ausgelösten Bewegung de Flüssigkeit mitgezogen und kommt zyklisch gegen die Ringe 50a,52a oder 50b, 52b aus Elastomer in Anlage. Diese Ringe hindern die Flüssigkeit daran, um die Trennwand 28a oder 28b herumzufließen, so daß der einzig mögliche Durchgang zwischen den beiden Kammer 30 und 32 der durch den - schraubenförmigen Kanal 38a oder 38b ist. Dieser Kanal ist so bemessen, daß eine ausreichende Dämpfung zum Abbremsen der durch die Träheit des Motors ausgelösten Bewegung erzielt wird.

Dieses Verhalten tritt auch beim Laufen des Motos mit Mindestleerlaufdrehzahl ein.

Vorzugsweise ist das System so ausgelegt, daß der Hub, den die Trennwand 28a oder 28b zwischen den Dichtungen 50a,52a oder 50b ausführen kann, im Bereich von 1 Millimeter liegt, um der Tatsache Rechung zu tragen, daß die durch das Laufen des Motors während des Fahrens des Fahrzeugs verursachten Schwingungen ungefähr diese Größenordnung aufweisen.

Durch die abgestimmte Kombination der Elastizität der Ringe 50a, 52a oder 50b,52b aus Elastomer mit der Masse der Trennwand 28a oder 28b läßt sich die Schwingungseigenfrequenz des so erhaltenen Trägheits-bzw. Schwingungssystems in der Weise vorherbestimmen, daß man dieses System entsprechend mit der in der Stütze enthaltenen Masse der Flüssigkeit und mit der Elastizität des Ringkörpers 20 in Beziehung setzt. Auf diese Art läßt sich eine örtlich gezielte Befestigung der dynamischen Steifigkeit der Stütze erreichen. Diese Beseitigung kann dann von Nutzen sein, wenn die Stütze in einem System bestehend aus Motor und Rahmen Verwendung befindet, das ein Geräuch aufweist, das einer ganz bestimmten Arbeitsfrequenz zuzuordnen ist. Wenn die Stützs auf diese bestimmte Frequenz eingestellt wird, besteht die Möglichkeit einer Verringerung des Motorgeräuches.

## Ansprüche

1. Elastische schwingungsdämpfende Stütze mit hydraulischer Dämpfung, insbesondere für Kolbenmotoren, umfassend:
- ein einen äußeren Mantel (12) aufweisendes starres erstes Stützenteil (10) und ein zu einem Ende der Stütze hin angeordnetes und eine gemeinsame Achse (A) mit dem ersten Stützenteil (10) besitzendes starres zweites Stützenteil (16);
- einen, aus Elastomer oder einem anderen elastisch verformbaren Werkstoff besthenden Ringkörper (20), der den Mantel (12) des ersten Stützenteils (10) mit dem zweiten Stützenteil (16) verschiebt;
- eine flexible quer angeordnete Membran (22), die den Mantel (12) des ersten Stützenteils (10) abschließt und die an einem Ende der Stütze angeordnet ist, das dem dem zweiten Stützenteil (16) gegenüberliegt;
- wobei die beiden Stützenteile (10, 16) der verformbare Körper (20) und die Membran (22) einen inneren, mit einer dämpfenden Flüssigkeit angefüllten Holraum begrenzen; und
-eine zur gemeinsamen Achse (A) quer angeordnete, mit dem Mantel (12) des ersten Stützenteils (10) in Verbindung stehende starre Trennwand (28a;28b), die den Hohlraum in eine auf der Seite der Membran (22) liegende erste Kammer (30) und in eine auf der Seite des zweiten Stützenteils (16) und des verformbaren Ringkörpers (20) liegende zweite Kammer (32) unterteilt und einen innenliegenden Kanal (38a;38b) für die gedrosselte Verbindung zwischen den beiden kammern (30,32) aufweist un dinder Lage ist, sich in Richtung zu der eine oder der anderen Kammer hin zu bewegen; dadurch **gekennzeichnet,** daß die Trennwand (28a,28b) aus einem zwischen zwei einander axial gegenüberliegend am Umfang angeordneten und mit dem mantel (12) des ersten Stützenteils (10) fest in Verbindung stehenden Schultern (46a,48; 46b,48b) eingesetzten starren Element besteht und axial zwischen diesen Schultern beweglich ist.

2 Stütze gemäß Anspruch 1, dadurch **gekennzeichnet,** daß die Schultern (46a,48; 46b,48b) sich kontinuierlich längs des Randes der Trennwand (28a,28b) erstrecken und das dieser Rand und die Schultern mit miteinander zusammenwirkenden Dichtungsmitteln (50a,52a;50b,52b) versehen sind, die den Durchgang der Flüssigkeit um den Rand der Trennwand (28a,28b) herum verhindern, wenn dieser alternativ gegen die eine oder die andere Schulter in Anlage kommt.

3. Stütze gemäß Anspruch 2, dadurch **gekennzeichnet,** daß die Dichtungsmittel aus Ringdichtungen (50a,52a;50b,52b) bestehen, die von den Schultern (46a,48a;46b,48b) und/oder vom Rand der Trennwand (28A,"(B) gehalten werden.

4. Stütze gemäß Anspruch 3, dadurch **gekennzeichnet,** daß die Ringdichtungen durch Lippen (50a,52a) aus Elastomer oder einem ähnlichen Werkstoff gebildet werden, die auf den Schultern (46a,48b) und/oder auf dem Rand der Trennwand gebracht sind.

5. Stütze gemäß Anspruch 3, dadurch **gekennzeichnet,** daß die Ringdichtungen durch O-Ringe (50b,52b) aus Elastomer oder einem ähnlichen Werkstoff gebildet werden, die in entsprechenden Ringnuten der Schultern (48b) und/oder im Rand der Trennwand (28b) gehalten werden.

6. Stütze gemäß einem der Ansprüche 3 bis 5, dadurch **gekennzeichnet,** daß die Ringdichtungen (50a,52a;50b,52b) elastisch zusammenpreßbar sind, um als federnde Endlagenanschläge für die Trennwand (28a;28b) zu wirken.

7. Stütze gemäß einem der vorangehenden Ansprüche, dadurch **gekennzeichnet,** daß die Schultern(46a,48a;46b,48b) in einer Weise angeordnet sind, daß sie einen Hub der Trennwand (28a,28b) im Bereich von 1 Millimeter ermöglichen.

FIG. 1

FIG. 2

0 276 673

M. CARAMAGNA - 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 147 242 (BRIDGESTONE CORP.)<br>* Ansprüche 1,2; Figur 7 *<br>--- | 1 | F 16 F 13/00<br>B 60 K 5/12 |
| Y | FR-A-2 547 378 (TOYODA GOSEI CO. LTD)<br>* Ansprüche 1,5,6,9; Figuren 1,2 *<br>--- | 1 | |
| Y | PATENT ABSTRACTS OF JAPAN, Band 10, Nr. 14 (M-447)[2071], 21. Januar 1986; &<br>JP-A-60 175 834 (HONDA GIKEN KOGYO K.K.) 10-09-1985<br>* Zusammenfassung *<br>--- | 1 | |
| Y<br>A | GB-A-2 041 485 (C. FREUDENBERG)<br>* Ansprüche 1-14; Figuren 1,3 *<br>--- | 1<br>2-4,6 | |
| A | EP-A-0 038 062 (NISSAN MOTOR CO. LTD)<br>* Anspruch 1; Figur 2 *<br>----- | 1-4,6 | |

**RECHERCHIERTE SACHGEBIETE (Int. Cl.4)**

F 16 F

Der vorliegende Recherchenbericht wurde für alle Patentansprüche erstellt

| Recherchenort | Abschlußdatum der Recherche | Prüfer |
|---|---|---|
| DEN HAAG | 21-04-1988 | SINGER G.M. |

EPO FORM 1503 03.82 (P0403)